(19) Europäisches Patentamt
European Patent Office
Office européen des brevets

(11) Veröffentlichungsnummer : **0 172 362**
**B1**

(12) **EUROPÄISCHE PATENTSCHRIFT**

(45) Veröffentlichungstag der Patentschrift : **02.03.88**

(21) Anmeldenummer : **85107926.9**

(22) Anmeldetag : **26.06.85**

(51) Int. Cl.⁴ : **C 08 G 18/10**, C 08 G 18/38, C 08 G 18/84, C 08 J 3/06, C 08 J 5/18, C 09 D 3/72

# (54) Kaltvernetzende PUR-Dispersionen, ihre Herstellung und Verwendung.

(30) Priorität : **24.08.84 DE 3431144**

(43) Veröffentlichungstag der Anmeldung : **26.02.86 Patentblatt 86/09**

(45) Bekanntmachung des Hinweises auf die Patenterteilung : **02.03.88 Patentblatt 88/09**

(84) Benannte Vertragsstaaten : **AT BE CH DE FR GB IT LI NL SE**

(56) Entgegenhaltungen :
**DE-A- 3 140 873**
**US-A- 3 432 456**

(73) Patentinhaber : **HÜLS AKTIENGESELLSCHAFT - RSP Patente / PB 15 - Postfach 13 20 D-4370 Marl 1 (DE)**

(72) Erfinder : **Disteldorf, Josef, Dr.**
**Am Sengenhoff 2a**
**D-4690 Herne 1 (DE)**
Erfinder : **Haage, Hans-Jürgen**
**Gaussstrasse 13**
**D-4690 Herne 2 (DE)**
Erfinder : **Schnurbusch, Horst, Dr.**
**Overwegstrasse 36**
**D-4690 Herne 1 (DE)**

**EP 0 172 362 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft kaltvernetzende anionische PUR-Dispersionen, die sich zur Beschichtung von Oberflächen, Herstellung von Filmen, Dichtungsmassen und Lederzurichtungen eignen.

Emulgatorfreie Ionomer-Dispersionen auf Basis von Polyurethanen (PUR) haben sich in der Praxis bewährt. Ursache hierfür dürfte ihre hohe mechanische und chemische Stabilität, ihr außergewöhnliches Filmbildungsvermögen, ihre gute Haftung auf Oberflächen sowie ihre große Variabilität im Hinblick auf Zusammensetzung und gewünschte Eigenschaften sein.

Derartige PUR-Dispersionen werden üblicherweise so hergestellt : Aus einem Polyisocyanat und einem Polyol, das man in weniger als der stöchiometrischen Menge einsetzt, wird ein Prepolymer hergestellt. Dieses wird mit einer ionomeren Verbindung umgesetzt, welche dem Prepolymer selbstemulgierende Eigenschaften verleiht. Man stellt eine Dispersion her, führt eine Kettenverlängerung durch und entfernt das Lösemittel nach dem sogenannten « Aceton »-Verfahren (vgl. Die Angewandte Makromolekulare Chemie 98, 133-165 (1981).

Die restlichen freien NCO-Gruppen des Prepolymeren dienen zur Umsetzung mit einem Kettenverlängerungsmittel.

Ein solches Verfahren wird beispielsweise in der CA-A 837 174 beschrieben. Die danach erhaltenen stark vernetzten Produkte sind jedoch weder in Lösemitteln löslich noch koagulieren sie zu einheitlichen Filmen (vgl. DE-B 26 24 442).

Es ist auch bekannt, das erhaltene Prepolymer mit Polyisocyanaten umzusetzen (vgl. DE-A 32 33 605).

Nach dem Verfahren der DE-A 32 38 169 werden lineare anionische Prepolymere mit Diaminen verlängert und anschließend mit einem Vernetzungsmittel, wie z. B. einem methoxymethylierten Melamin oder Harnstoff bei Temperaturen über 150 °C umgesetzt und vernetzt. Es findet somit keine Vernetzung bei Raumtemperatur statt. Diese ist aber erwünscht, da viele Substrate nicht thermostabil sind.

Die Dispersionen der zitierten deutschen Auslegeschrift 26 24 442 werden folgendermaßen erhalten : Zunächst wird ein Prepolymer hergestellt, das neben noch freien NCO-Gruppen auch anionische Salzgruppen besitzt und eine Viskosität von 50 bis 10 000 mPa · s aufweist. Dieses wird sodann mit Verbindungen umgesetzt, deren aktive Wasserstoffe mit den NCO-Gruppen schneller reagieren als Wasser. Als geeignete Verbindungen werden Ammoniak, primäre und sekundäre Amine, bevorzugt Diamine, Hydrazinderivate (Spalte 13, Zeile 35 ff.), Hydrazide von Dicarbonsäuren und Sulfonsäuren, wie beispielsweise Adipinsäuremono- und -dihydrazid (Spalte 14, Zeile 13 ff.), genannt. Eine im geringen Umfang stattfindende Umsetzung des NCO-Gruppen enthaltenden Prepolymeren mit Wasser ist erwünscht, wird doch angenommen, daß die gute Dispergierbarkeit der Produkte auf die Bildung von Harnstoffbindungen und Carbaminsäuresalzen zurückzuführen ist (vgl. Spalte 4, Zeile 16 ff.). Die Dispersionen gemäß DE-B 26 24 442 weisen jedoch den Nachteil auf, daß selbst bei Zusatz von Vernetzern bei Temperaturen unter 100 °C keine Lösemittelbeständigkeit erreicht werden kann.

Das Verfahren der DE-A 31 40 873 (entsprechend US-A 4 335 029) geht von höherfunktionellen anionischen Ionomeren mit über Carbonsäurehydraziden eingebauten Hydrazidgruppen aus, die mit Formaldehyd (vgl. DE-A 18 07 072) zu reaktionsfähigen Methylolverbindungen umgesetzt werden. Der Vorteil dieses Verfahrens liegt darin, daß nach Koagulation bei Raumtemperatur eine Kondensationsreaktion über die Methylolhydrazidgruppen ablaufen kann. Nachteilig ist aber, daß man die Lösemittelresistenz nur dadurch erzielen kann, daß man von Ionomeren ausgehen muß, deren Funktionalität größer als 2 ist und die damit zwangsläufig hochviskos sind. Die Dispergierung erfordert spezielle Dispergiereinrichtungen, die in der Lage sind, extrem hohe Scherkräfte zu überwinden. Infolge Inhomogenität führt dieses Verfahren zu Filmen mit gestörtem Verlauf (vgl. Vergleichsbeispiel A), erniedrigten Glanzwerten nach der Pigmentierung und einer erhöhten Anfälligkeit gegenüber Wasser und Alkalien. Es wäre wünschenswert, könnte man die Vernetzung im wesentlichen erst nach der Dispergierung durchführen.

Es wurde jetzt gefunden, daß man durch Verwendung eines Diaminohydrazids der Formel I

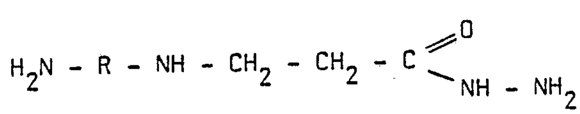

(I)

wobei R ein zweiwertiger aliphatischer Rest mit 2 bis 15 C-Atomen oder ein cycloaliphatischer oder aromatischer Rest mit jeweils 6 bis 16 C-Atomen ist, die aufgeführten Schwierigkeiten umgehen kann. Vorzugsweise wird ein Prepolymer mit linearem Molekülaufbau eingesetzt. Die mindestens 70 gewichtsprozentige Lösung des Prepolymeren sollte vorzugsweise eine maximale Viskosität von 10 000 mPa · sec aufweisen. Die freien NCO-Gruppen des Ionomeren werden mit den Aminogruppen des Diaminohydrazids kettenverlägert. Die endgültige Vernetzung erfolgt durch die an sich bekannte Reaktion zwischen Formaldehyd und den Hydrazidgruppen.

Gegenstand dieser Erfindung sind daher die Verfahren zur Herstellung wäßriger PUR-Dispersionen gemäß den Ansprüchen 1 bis 3, die nach diesen Verfahren erhaltenen Dispersionen gemäß Anspruch 4 sowie die Verwendung der Dispersionen zur Herstellung von Filmen gemäß Anspruch 5.

Das erfindungsgemäße Verfahren beruht auf der Erkenntnis, daß Dicarbonsäurehydrazide, wie beispielsweise Adipinsäuredihydrazid, zur Vernetzung des Prepolymeren wenig geeignet sind. Eigene Untersuchungen ergaben, daß die Reaktivität der Hydrazidgruppen gegenüber den freien NCO-Gruppen eines nach Beispiel 4.1 erhaltenen Ionomeren auf Basis von Isophorondiisocyanat so gering ist, daß die Umsetzung mit Wasser zu einer ernsten Nebenreaktion wird (vgl. Tabelle 1). Ähnliche Ergebnisse wurde mit Ionomeren auf Basis anderer Isocyanate erhalten.

Die Wasserreaktion ist unerwünscht, da sie keinen Beitrag zur Verzweigung leistet. Die Umsetzung des Prepolymeren mit einem Dihydrazid wirkt sich in diesem Sinne ebenfalls ungünstig aus. Aus statistischen Gründen kommt es nämlich nicht nur zu der gewünschten Umsetzung einer Hydrazidgruppe mit dem Prepolymeren ; vielmehr ist in erheblichem Umfang mit der Reaktion beider funktioneller Gruppen zu rechnen. Dies hat zur Folge, daß die Zahl der an dem Prepolymer gebundenen Hydrazidgruppen, die für die abschließende Vernetzung mit Formaldehyd zur Verfügung stehen, stark eingeschränkt ist.

Setzt man jedoch ein Diaminohydrazid der Formel I ein, so kommt es — aufgrund der wesentlich höheren Reaktivität der Aminogruppe — zu einer selektiven Reaktion. Die Konkurrenzreaktionen werden auf ein Mindestmaß beschränkt. Diese Vorgehensweise ermöglicht es, von weniger vernetzten und damit leichter handhabbaren Prepolymeren auszugehen.

Das erfindungsgemäße Verfahren zeichnet sich durch folgende Vorteile aus :

1. Es wird ein weniger vernetztes Prepolymeres hergestellt, das weniger viskos und damit rührbar und leichter handhabbar ist.

2. Eine weitgehende Vernetzung wird erst nach der Koagulation der Dispersion erreicht.

3. Man erhält harte, hoch vernetzte Filme mit verbesserter Lösemittelbeständigkeit.

Im folgenden sollen die einzelnen Stufen des Verfahrens beschrieben werden ;

Zunächst wird ein Prepolymer aus einem Polyisocyanat, einem Polyol und einer anionischen Verbindung hergestellt. Als Lösemittel verwendet man vorzugsweise N-Methylpyrrolidon und/oder Aceton. Als Katalysator kann Dibutylzinndilaurat (DBTL) zugesetzt werden.

Als Polyisocyanat werden eingesetzt :

1. aliphatische oder cycloaliphatische Diisocyanate mit bis zu 15 C-Atomen. Bevorzugt sind cycloaliphatische Diisocyanate mit 6 bis 15 C-Atomen, insbesondere Isophorondiisocyanat (IPDI).

2. Addukte der unter 1. aufgeführten Diisocyanate mit den weiter unten aufgeführten Polyolen, insbesondere Trimethylolpropan (TMP), sowie mit Melamin.

3. Oligomere der unter 1. aufgeführten Diisocyanate, vorzugsweise die Isocyanurate.

Als Polyole werden folgende OH-Gruppen enthaltende Verbindungen mit Molekulargewichten zwischen 500 und 2 000 eingesetzt :

1. Polyester, bestehend aus folgenden Säure- und Alkoholkomponenten :

a) aliphatische und aromatische Dicarbonsäuren mit 5 bis 15 C-Atomen oder deren Anhydride, wie Adipinsäure, Decandicarbonsäure, Isophthalsäure und Phthalsäureanhydrid ;

b) Polyole mit 2 bis 15 C-Atomen und 2 bis 4 OH-Gruppen pro Molekül, wie Ethylenglykol, Diethylenglykol, 1,4-Butandiol, Neopentylglykol, 1,6-Hexandiol, Trimethylolpropan (TMP) und Pentaerythrit.

2. Lineare und trifunktionelle Polycaprolactone. Derartige Produkte erhält man ausgehend von difunktionellen Verbindungen, wie Wasser und Ethylenglykol, oder trifunktionellen Verbindungen wie TMP in Gegenwart von Zinnkatalysatoren bei Temperaturen bis 160 °C.

3. Polyether auf Basis von Glykolen, wie Polypropylenglykol und Polytetramethylenglykol.

Als anionische Verbindungen werden Carbon- und Sulfonsäuren mit maximal 10 C-Atomen eingesetzt. Geeignet sind Diaminocarbonsäuren, Diaminosulfonsäuren und Dihydroxycarbonsäuren. Bevorzugt wird Dimethylolpropionsäure.

Anschließend werden die freien Säuregruppen des Prepolymeren durch Zugabe einer Base neutralisiert.

Dies kann zum Beispiel ein Alkalihydroxid oder ein tertiäres Amin sein. Bevorzugt wird Triethylamin.

Das neutralisierte Prepolymer ist nicht lagerungsstabil. Es sollte daher bald weiterverarbeitet werden. Man erzeugt vorzugsweise die wäßrige Dispersion, indem man eine kräftige Rührgeschwindigkeit (ca. 100 Umdrehungen pro Minute) einstellt und die ein- bis dreifache Menge Wasser zusetzt.

Sobald die Lösung homogen ist, läßt man vorzugsweise eine ca. 30 %ige wäßrige Lösung des Diaminohydrazids der Formel I unmittelbar in die entstandene Dispersion unter Rühren zügig einlaufen.

Schließlich wird vorzugsweise bei einer Temperatur von etwa 45 °C eine verdünnte Formalinlösung zugegeben und bei dieser Temperatur etwa 30 Minuten bis zur vollständigen Methylolbildung umgesetzt.

Das Diaminohydrazid I wird durch Umsetzung eines Diamins der Formel $H_2N—R—NH_2$ mit 0,2 bis 2 Mol eines Acrylsäurederivats, vorzugsweise Acrylsäureethylester, und nachfolgend mit Hydrazin erhalten.

Geeignete Diamine der Formel $H_2N—R—NH_2$ sind aliphatische Diamine mit 2 bis 15 C-Atomen oder cycloaliphatische oder aromatische Diamine mit jeweils 6 bis 15 C-Atomen, wie z. B. Ethylendiamin, Butandiamin-1,4, Hexamethylendiamin, 2,2,4- und 2,4,4-Trimethylhexamethylendiamin, 4,4'-Diaminodicyclohexylmethan und Xylylendiamin. Isophorondiamin wird bevorzugt.

Die fertigen Dispersionen werden z. B. mit einem Rakel auf eine glatte Oberfläche (z. B. Glas oder Metall) aufgebracht.

Beispiel 1

(Herstellung eines Diaminohydrazids als Kettenverlängerungsmittel)

170,0 g (1 Mol) Isophorondiamin werden in einem 1-1-Dreihalskolben, versehen mit Rührer, Rückflußkühler, Gaseinleitungsrohr und Tropftrichter, unter Stickstoff vorgelegt und unter Rühren auf 45 °C vorgeheizt. 100,0 g (1 Mol) Acrylsäureethylester wird innerhalb von 90 Minuten bei einer Temperatur von 45 bis 50 °C unter Rühren eingetropft. Man hält den Ansatz anschließend weitere 7 Stunden unter mäßiger Rührung bei dieser Temperatur. Danach ist der Acrylester vollständig umgesetzt. Das Produkt hat einen Brechungsindex von $n_D^{25}$ = 1,476 5. Anschließend werden 50,0 g (1 Mol) Hydrazinhydrat ($N_2H_4 \cdot H_2O$) unter Rühren bei einer Temperatur von 50 °C zügig zugegeben. Dann wird die Mischung unter weiterem Rühren vorsichtig auf 65 °C etwärmt. Etwa bei 60 °C setzt die Reaktion unter milder Wärmeentwicklung ein. Nach 5 Stunden, wenn die anfängliche Trübung verschwunden ist, ist die Reaktion beendet.

Die Produktkontrolle erfolgt durch potentiometrische Titration. Mit Salzsäure in Isopropanol als Lösemittel werden die primären und sekundären Aminogruppen erfaßt.

Titration mit HCl : 6,28 mMol Amin/g
(6,25 berechnet)

Beispiel 2

(Allgemeine Beschreibung der Herstellung der Dispersion)

In einem Dreihalskolben werden Dimethylolpropionsäure, gegebenenfalls Trimethylolpropan sowie N-Methylpyrrolidon und/oder Aceton vorgelegt und unter leichtem Rühren auf 60 °C erwärmt. Nun werden das Polyol und Dibutylzinndilaurat eingerührt. Die erforderliche Menge IPDI wird so zugegeben, daß die Reaktionstemperatur 80 °C nicht überschreitet. Nach etwa 5 Stunden Reaktionszeit, wenn die jeweilige theoretische NCO-Zahl erreicht ist, läßt man abkühlen. Man setzt Triethylamin zu, bis die Reaktionsmischung neutral reagiert, stellt eine Rührgeschwindigkeit von 100 Umdrehungen pro Minute ein und gibt das Wasser innerhalb von 1 Minute hinzu. Sobald sich eine homogene Lösung gebildet hat, wird eine 30 %ige wäßrige Lösung des Hydrazids gemäß Beispiel 1 innerhalb von 1 Minute zugesetzt. Dabei ist darauf zu achten, daß die wäßrige Lösung möglichst ohne Berührung der Innenwand des Reaktionskolbens direkt in die entstandene Dispersion einfließen kann. Nach 5 Minuten wird die Rührgeschwindigkeit reduziert. Man hält die Reaktionslösung 2 Stunden bei 45 °C, setzt die 37 %ige wäßrige Formalinlösung zu und hält eine weitere Stunde bei 45 °C. Nach Abkühlung wird die Reaktionslösung durch ein Filtertuch filtriert. Wird Aceton als Lösemittel verwendet, so wird es bei einer Temperatur von maximal 60 °C im Rotationsverdampfer unter vermindertem Druck abgezogen. Die erhaltenen Dispersionen haben einen Feststoffgehalt von etwa 30 Gewichtsprozent.

Beispiel 2.1

Mit anderen Diaminen wie Ethylendiamin, Hexamethylendiamin-1,6, 2-Methylpentamethylendiamin und 2,2,4- und/oder 2,4,4-Trimethylhexamethylendiamin wurden ähnliche Ergebnisse erhalten.

Beispiel 3

(Polyole)

Beispiel 3.1

Aus 4 Mol Adipinsäure, 3 Mol Neopentylglykol und 2 Mol 1,6-Hexandiol wird ein linearer Polyester mit einer OH-Zahl von 110 hergestellt.

Beispiel 3.2

Es kommt ein Polytetramethylenglykol mit einem Molekulargewicht von 1 000 zum Einsatz. Ein solches Produkt ist unter dem Namen TERATHANE® 1 000 im Handel erhältlich (Hersteller Fa. E. I. du Pont de Nemours and Company, Wilmington, Del., USA).

Beispiel 3.3

Es kommt ein Polytetramethylenglykol mit einem Molekulargewicht von 2 000 zum Einsatz. Ein solches Produkt ist unter dem Namen TERATHANE® 2 000 im Handel erhältlich (Hersteller Fa. E. I. du Pont de Nemours and Company, Wilmington, Del., USA).

Beispiel 3.4

Es kommt ein Polycaprolacton mit einem Molekulargewicht von 2 000 zum Einsatz. Ein solches Produkt ist unter dem Namen CAPA® 220 im Handel erhältlich (Hersteller Fa. Solvay & Cie., B-1050 Brüssel).

Tabelle 1

Vergleich der Umsatzraten [in %] von NCO-Gruppen eines Ionomeren auf Basis IPDI (gemäß Beispiel 4.1) mit Wasser, Ethylendiamin oder Adipinsäuredihydrazid in Gegenwart von Wasser

| Zeit [ Min ] | Ethylendiamin *) in Gegenwart von Wasser | Adipinsäuredihydrazid *) in Gegenwart von Wasser | Wasser |
|---|---|---|---|
| 0,5 | 100 | 10 | 5 |
| 1,0 | 100 | 25 | 10 |
| 5,0 | 100 | 50 | 13 |
| 10,0 | 100 | 55 | 15 |
| 20,0 | 100 | 72 | 21 |
| 30,0 | 100 | 80 | 23 |
| 60,0 | 100 | 84 | 30 |
| 120,0 | 100 | 86 | 40 |
| 180,0 | 100 | 88 | 43 |
| 240,0 | 100 | 90 | 45 |

*) Es wurden stöchiometrische Mengen eingesetzt.

Tabelle 2

Rezepturen erfindungsgemäßer Dispersionen

| Komponente | Beispiel 4.1 | | Beispiel 4.2 | | Beispiel 4.3 | | Beispiel 4.4 | |
|---|---|---|---|---|---|---|---|---|
| | Äquivalent/Gew.-Teile | | Äquivalent/Gew.-Teile | | Äquivalent/Gew.-Teile | | Äquivalent/Gew.-Teile | |
| Polyester gem. 3.1 | 1,00 | 510,0 | - | - | - | - | - | - |
| Polyester gem. 3.2 | - | - | 1,00 | 500,0 | - | - | - | - |
| Polyester gem. 3.3 | - | - | - | - | 1,00 | 1000,0 | - | - |
| Polyester gem. 3.4 | - | - | - | - | - | - | 1,00 | 1000,0 |
| Trimethylolpropan | 0,30 | 13,4 | 0,20 | 8,9 | 0,10 | 4,5 | - | - |
| Dimethylolpropionsäure | 0,60 | 40,2 | 0,50 | 33,5 | 0,70 | 46,9 | 0,70 | 46,9 |
| IPDI | 3,04 | 337,5 | 2,72 | 301,9 | 2,88 | 320,0 | 2,72 | 302,0 |
| N-Methylpyrrolidon | - | 362,0 | - | 100,5 | - | - | - | - |
| Triethylamin | 0,30 | 30,3 | 0,25 | 25,2 | 0,35 | 35,4 | 0,35 | 35,4 |
| Isophorondiaminpropionsäurehydrazid | 0,513 (Mol) | 134,6* | 0,459 (Mol) | 123,9* | 0,486 (Mol) | 152,0 | 0,459 (Mol) | 123,9* |
| Formaldehyd | 0,40 | 32,0 | 0,36 | 28,6 | 0,38 | 31,0 | 0,36 | 28,6 |
| Aceton | | - | | 400,0 | | 200,0 | | 300,0 |
| Wasser, dest. | | 1900,0 | | 2100,0 | | 4500,0 | | 3500,0 |
| Dibtuylzinndilaurat | | 0,4 | | 0,4 | | 0,4 | | 0,4 |

* bezogen auf 100 %iges Produkt

Tabelle 3

| Eigenschaften der erfindungsgemäßen Dispersionen | | | | |
|---|---|---|---|---|
| | Beispiel 4.1 | Beispiel 4.2 | Beispiel 4.3 | Beispiel 4.4 |
| Aussehen | weiß | weiß | weiß | weiß |
| Feststoffgehalt % | 33 | 34 | 35 | 30 |
| Teilchenladung | anionisch | anionisch | anionisch | anionisch |
| Teilchengröße | kolloidal | kolloidal | kolloidal | kolloidal |
| pH-Wert bei 25 °C | 7,5 | 7 - 7,5 | 7,5 - 8 | 7,5 - 8 |
| Viskosität bei 25 °C | 15,5 mPa s | 18,1 mPa s | 179 mPa s | 218 mPa s |
| Flammpunkt geschlossen °C | > 93 | > 93 | > 93 | > 93 |
| flüchtige organische Bestandteile Gewichtsprozent | 10,7 | 3,2 | - | - |
| Spezifisches Gewicht $gcm^{-3}$ | 1,043 | 1,024 | 1,013 | 1,012 |
| Stockpunkt °C | -3 | -1 | 2 | 3 |
| Filmeigenschaften | | | | |
| Zugfestigkeit $Nmm^{-2}$ | 45 | 43 | 37 | 39 |
| Dehnung % | 200 | 250 | 420 | 510 |
| Osram-Sylt-Test | 1000 h - ok | 1000 h - ok | 1000 h - ok | 1000 h - ok |
| Pendelhärte nach König (sec) (DIN 53 157) | 100 | 90 | 40 | 55 |
| Erichsentiefung (mm) (DIN 53 156) | > 10 | > 10 | > 10 | > 10 |

Vergleichsbeispiel A

(analog zu DE-A 31 40 873

375 g (0,5 Äquivalente) eines linearen Polyesters gemäß Beispiel 3.3, 33,6 g (0,8 Äquivalente) Melamin und 355,2 g (3,2 Äquivalente) Isophorondiisocyanat werden in Gegenwart von 0,05 Gewichtsprozent Dibutylzinndilaurat und 350 g N-Methylpyrrolidon bei 140 °C innerhalb von 3 Stunden zur Reaktion gebracht. Danach werden 53,6 g (0,8 Äquivalente) Dimethylolpropionsäure zugegeben und bei 80 °C solange umgesetzt, bis ein NCO-Gehalt von 3,5 Gewichtsprozent erreicht ist. Unter Einsatz eines hochwirksamen Dispergators wurde nun 327 g Wasser zugesetzt und sofort darauf mit 12 g (0,41 Äquivalenten) Ethylendiamin und 6,9 g (0,21 Äquivalente) Diethylentriamin kettenverlängert. Es wurde mit 69,5 g (0,81 Äquivalente) Adipinsäuredihydrazid überkappt und schließlich mit 32,5 g (0,41 Äquivalente) einer 37 %igen wäßrigen Formalinlösung in 30 g Wasser bei 45 °C 1 Stunde umgesetzt. Es entstand eine grobdisperse Dispersion, die nur wenige Tage mit starkem Bodensatz beständig war. Aus der Dispersion war nach Auftragen mit einem Rakel kein klarer einheitlicher Film zu erzielen.

Vergleichsbeispiel B

Anstelle von 355,2 g Isophorondiisocyanat werden 428,8 g 4,4'-Methylenbis(cyclohexylisocyanat) eingesetzt. Die Lösung in N-Methylpyrrolidon war extrem viskos ; daher mußte Aceton als zusätzliches Verdünnungsmittel zugesetzt werden. Nach Zusatz der Formalinlösung konnte auch durch Verdünnung keine einheitliche Dispersion erhalten werden.

## Patentansprüche

1. Verfahren zur Herstellung von wäßrigen anionischen PUR-Dispersionen durch
Herstellung eines Prepolymeren mit NCO-Endgruppen auf Basis von (cyclo)aliphatischen Polyisocyanaten, Polyolen und anionischen Verbindungen,
Dispergieren in Wasser sowie
Umsetzung mit Amino- und Hydrazingruppen aufweisenden Kettenverlängerungsmitteln und Formaldehyd als Vernetzer.
dadurch gekennzeichnet, daß man ein Prepolymer durch Umsetzung eines (cyclo)aliphatischen Polyisocyanats mit einem Polyol (Molekulargewicht zwischen 500 und 2 000), einer Carbon- oder Sulfonsäure mit maximal 10 C-Atomen und einer Base in einem organischen Lösungsmittel herstellt, das in Wasser dispergierte Prepolymer zunächst mit einem Diaminohydrazid der Formel I umsetzt,

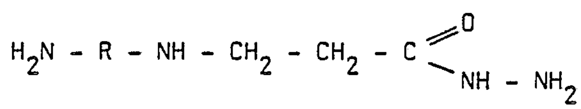

wobei R ein aliphatischer Rest mit 2 bis 15 C-Atomen oder ein cycloaliphatischer oder aromatischer Rest mit jeweils 6 bis 15 C-Atomen ist, und anschließend in an sich bekannter Weise mit Formaldehyd vernetzt.

2. Verfahren nach Anspruch 1, dadurch gekennzeichnet, daß in der ersten Stufe so gearbeitet wird, daß eine Prepolymerlösung mit mindestens 70 Gew.-% Feststoff und einer Viskosität von höchstens 10 000 mPa · sec erhalten wird, wobei man Aceton oder N-Methylpyrrolidon als Lösungsmittel verwendet.

3. Verfahren nach Anspruch 1 oder 2, dadurch gekennzeichnet, daß der Rest R die Struktur

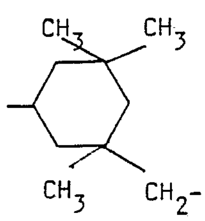

aufweist.

4. Anionische PUR-Dispersionen auf Basis von urethangruppenhaltigen Prepolymeren, Diaminohydraziden der Formel I gemäß Anspruch 1 und Formaldehyd, erhältlich nach dem Verfahren gemäß Ansprüchen 1-3.

5. Verwendung der nach den Ansprüchen 1 bis 3 hergestellten wäßrigen anionischen PUR-Dispersionen zur Herstellung von Filmen.

**Claims**

1. A process for the production of an aqueous anionic PUR dispersion by

preparation of a prepolymer having NCO end groups and based on a (cyclo)aliphatic polyisocyanate, a polyol and an anionic compound,

its dispersion in water and

its reaction with a chain-extending agent having amino and hydrazine groups and with formaldehyde as a cross-linking agent,

characterized in that a prepolymer is prepared by reacting a (cyclo)aliphatic polyisocyanate with a polyol (molecular weight from 500 to 2,000), a carboxylic or sulfonic acid having at most 10 carbon atoms and a base in an organic solvent, and prepolymer dispersed in water is first reacted with a diamino-hydrazide of the formula I,

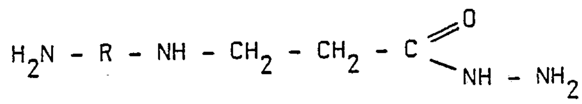

R being an aliphatic radical having 2 to 15 carbon atoms or a cycloaliphatic or aromatic radical each having 6 to 15 carbon atoms, and subsequently crosslinked with formaldehyde in a manner known per se.

2. A process according to claim 1, characterized in that the procedure in the first stage is such that a prepolymer solution of at least 70 % by weight solids content and a viscosity of at most 10,000 mPa · sec. is obtained, acetone or N-methylpyrrolidone being used as the solvent.

3. A process according to claim 1 or 2, characterized in that the radical R has the structure

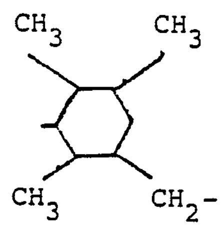

4. An anionic PUR dispersion based on a prepolymer containing urethane groups, a diamino-hydrazide of the formula I defined in claim 1 and formaldehyde, obtainable by a process according to any of claims 1 to 3.

5. The use of an aqueous anionic PUR dispersion produced according to any of claims 1 to 3 for the production of films.

**Revendications**

1. Procédé de préparation de dispersions anioniques aqueuses de poly-uréthanne, ce par

préparation d'un pré-polymère comportant des groupes NCO terminaux, à base de poly-isocyanates (cyclo)aliphatiques, de polyols et de composés anioniques,

dispersion dans de l'eau, ainsi que

réaction sur des agents prolongateurs de chaîne présentant des groupes amine et des groupes hydrazine, et du foraldéhyde en tant qu'agent de réticulation,

caractérisé par le fait que l'on prépare un pré-polymère en faisant réagir un poly-isocyanate (cyclo)aliphatique sur un polyol (poids moléculaire compris entre 500 et 2 000), sur un acide carboxylique ou sulfonique comportant au plus 10 atomes de carbone et sur une base, dans un solvant organique, que l'on disperse le pré-polymère dans de l'eau et qu'on le fait réagir d'abord sur un diamino-hydrazide de la formule (I)

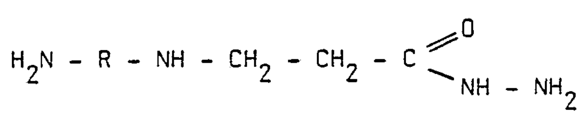

dans laquelle R est un reste aliphatique comportant de 2 à 15 atomes de carbone ou un reste cycloaliphatique ou aromatique comportant chaque fois de 6 à 15 atomes de carbone, et qu'on réticule ensuite avec du formaldéhyde, d'une manière connue en soi.

2. Procédé selon la revendication 1, caractérisé par le fait que dans le premier stade on travaille de manière à obtenir une solution de pré-polymère comportant au moins 70 % en poids de substance solide

et présentant une viscosité au plus égale à 10 000 mPa · s, en utilisant comme solvant de l'acétone ou de la N-méthyl-pyrrolidone.

3. Procédé selon la revendication 1 ou 2, caractérisé par le fait que le reste R présente la structure :

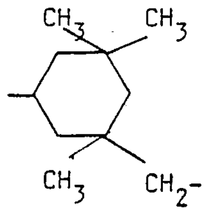

4. Les dispersions anioniques de poly-uréthanne à base de pré-polymères renfermant des groupes uréthane, de diamino-hydrazides de la formule (I) selon la revendication 1 et de formaldéhyde, que l'on peut obtenir par le procédé selon les revendications 1 à 3.

5. L'utilisation, pour la préparation de feuils, des dispersions anioniques aqueuses de poly-uréthanne qui sont préparées selon les revendications 1 à 3.